# EUROPEAN PATENT APPLICATION

(11) **EP 3 933 059 A1**
(43) Date of publication of application: **05.01.2022**
(21) Application number: 20182760.7
(22) Date of filing: 29.06.2020
(51) Int. Cl.: C22C 19/05, B29B 9/06, C08G 64/40, C08G 64/20, B29C 48/345, B29C 48/04, B29C 48/05, B29K 69/00

(54) **PROCESS FOR THE PREPARATION OF A POLYCARBONATE**

(71) Applicant: Covestro Deutschland AG, 51373 Leverkusen (DE)
(72) Inventor: BRUYNSEELS, Frank, 9170 Sint-Gillis-Waas (BE); DECLOEDT, Johan, 4562AH Hulst (BE); WUYTACK, Wim, 9160 Lokeren (BE); LIESENFELDER, Ulrich Dr., 51469 Bergisch Gladbach (DE); VANDEN EYNDE, Johan, 9052 Zwijnaarde (BE)
(74) Representative: Levpat

(57) **Abstract**

The present invention relates to a process for the preparation of a polycarbonate by a melt transesterification process or by a phase transfer process. The process according to the invention is characterized in that a finished polycarbonate having a mean molecular weight of 15,000 g/mol to 60,000 g/mol is passed through an orifice in a die plate comprising a number of such orifices, each orifice comprising an insert. The insert used in the process according to the invention is in form of a bushing and this insert essentially consist of an alloy comprising equal to or less than 5 wt.-% Fe. Particularly the alloy comprises the following components:
(a) equal to or less than 5 wt.-% Fe,
(b) equal to or more than 40 wt.-% Ni,
(c) equal to or more than 15 wt.-% Cr,
(d) equal to or more than 10 wt.-% Mo,
(e) equal to or less than 5.5 wt.-% W,
(f) equal to or less than 24.5 wt.-% other components,
wherein the sum of the amounts of Fe, Ni, Cr, Mo, W and the other components adds up to 100 wt.-%.

## Description

The present invention relates to a process for the preparation of a polycarbonate by a melt transesterification process or by a phase transfer process. The process according to the invention is characterized in that a finished polycarbonate having a mean molecular weight of 15,000 g/mol to 60,000 g/mol is passed through an orifice in a die plate comprising a number of such orifices, each orifice comprising an insert. The insert used in the process according to the invention is in form of a bushing and this insert essentially consist of an alloy comprising equal to or less than 5 wt.-% Fe. Particularly the alloy comprises the following components:
(a) equal to or less than 5 wt.-% Fe,
(b) equal to or more than 40 wt.-% Ni,
(c) equal to or more than 15 wt.-% Cr,
(d) equal to or more than 10 wt.-% Mo,
(e) equal to or less than 5.5 wt.-% W,
(f) equal to or less than 24.5 wt.-% other components,
wherein the sum of the amounts of Fe, Ni, Cr, Mo, W and the other components adds up to 100 wt.-%. Preferably the alloy comprises equal to or less the 2 wt.-% Fe, equal to or more than 45% wt.-% Ni, equal to or more than 18 wt.-% Cr, equal to or more than 12% wt.-% Mo, equal to or less than 5.5% wt.-% W, and equal to or less than 17.5 wt.-% other components, wherein the sum of the amounts of Fe, Ni, Cr, Mo, W and the other components adds up to 100 wt.-%. More preferably alloy comprises equal to or less than 1.5 wt.-% Fe, equal to or more than 50 wt.-% Ni, equal to or more than 20 wt.-% Cr, equal to or more than 14 wt.-% Mo, equal to or less than 5.5 wt.-% W, and equal to or less than 9 wt.-% other components, wherein the sum of the amounts of Fe, Ni, Cr, Mo, W and the other components adds up to 100 wt.-%. Other components which may be comprised in the alloy are such as Mn, Cu, Al, Si, P, S, C, V, and/or Co, e.g.

The process according to the invention results in a prolongation of the time in which the die plate can be used for the preparation of a polycarbonate without cleaning while the quality of the polycarbonate prepared shall remain acceptable. This - in turn - reduces costly and therefore undesired losses of continuity in the production of the polycarbonate and/or undesired high die cleaning efforts.

Die plates used in the preparation of polymers are commonly known in the state of the arts. Examples for documents disclosing such die plates are DE102011102069A1, EP2399716A2, EP2617547A1, or WO2012095125A1.

Polycarbonates and production thereof by a melt transesterification process or a by a phase transfer process are known in the prior art, too.

Polycarbonates in the context of the present invention are either homopolycarbonates or copolycarbonates and/or polyestercarbonates; the polycarbonates may, in a known manner, be linear or branched. According to the invention, it is also possible to use mixtures of polycarbonates.

The thermoplastic polycarbonates including the thermoplastic aromatic polyestercarbonates have mean molecular weights M_{w} (determined by gel permeation chromatography, (GPC)) of 15,000 g/mol to 60,000 g/mol, preferably of 18,000 g/mol to 50 000 g/mol, especially of 26,000 g/mol to 45,000 g/mol. Calibration is effected with linear polycarbonates (formed from bisphenol A and phosgene) of known molar mass distribution from PSS Polymer Standards Service GmbH, Germany, calibration by method 2301-0257502-09D (from 2009 in German) from Currenta GmbH & Co. OHG, Leverkusen. The eluent is dichloromethane. Column combination of crosslinked styrene-divinylbenzene resins. Diameter of the analytical columns: 7.5 mm; length: 300 mm. Particle size of the column material: 3 µm to 20 µm. Concentration of solutions: 0.2% by weight. Flow rate: 1.0 ml/min, temperature of the solutions: 30°C. Detection with the aid of a UV detector at a wave length of 254 nm. All molecular weights refer to the weight average of the molecular weight.

A portion of up to 80 mol%, preferably of 20 mol% up to 50 mol%, of the carbonate groups in the polycarbonates used in accordance with the invention may be replaced by aromatic dicarboxylic ester groups. Polycarbonates of this kind, incorporating both acid radicals from the carbonic acid and acid radicals from aromatic dicarboxylic acids in the molecule chain, are referred to as aromatic polyestercarbonates. In the context of the present invention, they are encompassed by the umbrella term of the thermoplastic aromatic polycarbonates.

The polycarbonates are prepared in a known manner from diphenols, carbonic acid derivatives, optionally chain terminators and optionally branching agents, with preparation of the polyestercarbonates by replacing a portion of the carbonic acid derivatives with aromatic dicarboxylic acids or derivatives of the dicarboxylic acids, according to the carbonate structural units to be replaced in the aromatic polycarbonates by aromatic dicarboxylic ester structural units.

Dihydroxyaryl compounds suitable for the preparation of polycarbonates are those of the formula (1)

HO-Z-OH (1),

in which
- Z: is an aromatic radical which has 6 to 30 carbon atoms and may contain one or more aromatic rings, may be substituted and may contain aliphatic or cycloaliphatic radicals or alkylaryls or heteroatoms as bridging elements.

Preferably, Z in formula (1) is a radical of the formula (2) 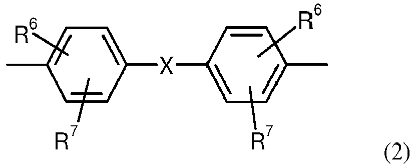 in which
- R⁶ and R⁷: are each independently H, C₁- to C₁₈-alkyl-, C₁- to C₁₈-alkoxy, halogen such as Cl or Br or in each case optionally substituted aryl or aralkyl, preferably H or C₁- to C₁₂-alkyl, more preferably H or C₁- to C₈-alkyl and most preferably H or methyl, and
- X: is a single bond, -SO₂-, -CO-, -O-, -S-, C₁- to C₆-alkylene, C₂- to Cs-alkylidene or C₅- to C₆-cycloalkylidene which may be substituted by C₁- to C₆-alkyl, preferably methyl or ethyl, or else C₆- to C₁₂-arylene which may optionally be fused to further aromatic rings containing heteroatoms.

Preferably, X is a single bond, C₁- to Cs-alkylene, C₂- to Cs-alkylidene, C₅- to C₆-cycloalkylidene, -O-, -SO-, -CO-, -S-, -SO₂-
or a radical of the formula (3a)

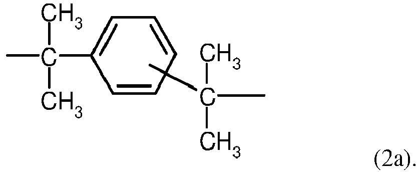

Examples of dihydroxyaryl compounds (diphenols) are: dihydroxybenzenes, dihydroxydiphenyls, bis(hydroxyphenyl)alkanes, bis(hydroxyphenyl)cycloalkanes, bis(hydroxyphenyl)aryls, bis(hydroxyphenyl) ethers, bis(hydroxyphenyl) ketones, bis(hydroxyphenyl) sulphides, bis(hydroxyphenyl) sulphones, bis(hydroxyphenyl) sulphoxides, 1,1'-bis(hydroxyphenyl)diisopropylbenzenes and the ring-alkylated and ring-halogenated compounds thereof.

Examples of diphenols suitable for the preparation of the polycarbonates for use in accordance with the invention include hydroquinone, resorcinol, dihydroxydiphenyl, bis(hydroxyphenyl)alkanes, bis(hydroxyphenyl)cycloalkanes, bis(hydroxyphenyl) sulphides, bis(hydroxyphenyl) ethers, bis(hydroxyphenyl) ketones, bis(hydroxyphenyl) sulphones, bis(hydroxyphenyl) sulphoxides, α,α'-bis(hydroxyphenyl)diisopropylbenzenes and the alkylated, ring-alkylated and ring-halogenated compounds thereof.

Preferred diphenols are 4,4'-dihydroxydiphenyl, 2,2-bis(4-hydroxyphenyl)-1-phenylpropane, 1,1-bis(4-hydroxyphenyl)phenylethane, 2,2-bis(4-hydroxyphenyl)propane, 2,4-bis(4-hydroxyphenyl)-2-methylbutane, 1,3-bis[2-(4-hydroxyphenyl)-2-propyl]benzene (bisphenol M), 2,2-bis(3-methyl-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl) sulphone, 2,4-bis(3,5-dimethyl-4-hydroxyphenyl)-2-methylbutane, 1,3-bis[2-(3,5-dimethyl-4-hydroxyphenyl)-2-propyl]benzene and 1,1-bis(4-hydroxyphenyl)-3,3,5-trimethylcyclohexane (also abbreivated to bisphenol TMC), or one of the bisphenols of the formulas (3) to (5) 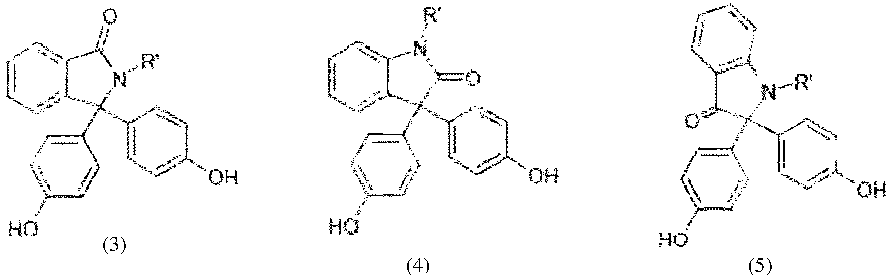 wherein R' in each case means C₁-C₄-alkyl, aralkyl or aryl, preferably means methyl oder phenyl.

Particularly preferred dihydroxyaryl compounds are 4,4'-dihydroxydiphenyl, 1,1-bis(4-hydroxyphenyl)phenylethane, 2,2-bis(4-hydroxyphenyl)propane (BPA), 2,2-bis(3,5-dimethyl-4-hydroxyphenyl)propane, 1,1-bis(4-hydroxyphenyl)cyclohexane and 1,1-bis(4-hydroxyphenyl)-3,3,5-trimethylcyclohexane (TMC), or one of the bisphenols of the formulas (3) to (5) 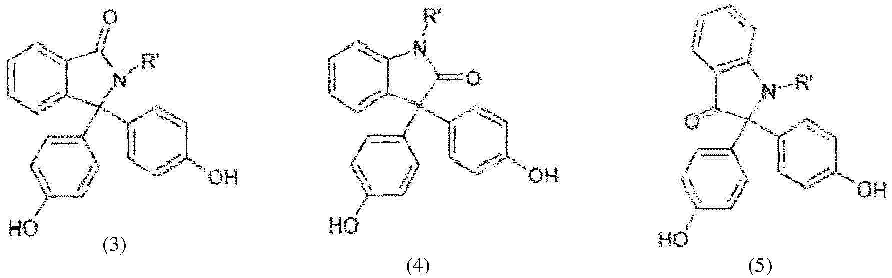 wherein R' in each case means C₁-C₄-alkyl, aralkyl or aryl, preferably means methyl oder phenyl.

These and further suitable diphenols are described, for example, in US 2 999 835 A, 3 148 172 A, 2 991 273 A, 3 271 367 A, 4 982 014 A and 2 999 846 A, in German published specifications 1 570 703 A, 2 063 050 A, 2 036 052 A, 2 211 956 A and 3 832 396 A, in French patent 1 561 518 A1, in the monograph "H. Schnell, Chemistry and Physics of Polycarbonates, Interscience Publishers, New York 1964, p. 28 ff.; p.102 ff.", and in "D.G. Legrand, J.T. Bendler, Handbook of Polycarbonate Science and Technology, Marcel Dekker New York 2000, p. 72ff.".

Only one diphenol is used in the case of the homopolycarbonates; two or more diphenols are used in the case of copolycarbonates. The diphenols employed, similarly to all other chemicals and assistants added to the synthesis, may be contaminated with the contaminants from their own synthesis, handling and storage. However, it is desirable to employ the purest possible raw materials.

The monofunctional chain terminators needed to regulate the molecular weight, such as phenols or alkylphenols, especially phenol, p-tert-butylphenol, isooctylphenol, cumylphenol, the chlorocarbonic esters thereof or acid chlorides of monocarboxylic acids or mixtures of these chain terminators, are either supplied to the reaction together with the bisphenoxide(s) or else added to the synthesis at any time, provided that phosgene or chlorocarbonic acid end groups are still present in the reaction mixture, or, in the case of the acid chlorides and chlorocarbonic esters as chain terminators, provided that sufficient phenolic end groups of the polymer being formed are available. Preferably, the chain terminator(s), however, is/are added after the phosgenation at a site or at a time when no phosgene is present any longer but the catalyst has still not been metered in, or are metered in prior to the catalyst, together with the catalyst or in parallel.

Any branching agents or branching agent mixtures to be used are added to the synthesis in the same manner, but typically before the chain terminators. Typically, trisphenols, quaterphenols or acid chlorides of tri- or tetracarboxylic acids are used, or else mixtures of the polyphenols or of the acid chlorides.

Some of the compounds having three or more than three phenolic hydroxyl groups that are usable as branching agents are, for example, phloroglucinol, 4,6-dimethyl-2,4,6-tri(4-hydroxyphenyl)hept-2-ene, 4,6-dimethyl-2,4,6-tri-(4-hydroxyphenyl)heptane, 1,3,5-tris(4-hydroxyphenyl)benzene, 1,1,1 -tri-(4-hydroxyphenyl)ethane, tris(4-hydroxyphenyl)phenylmethane, 2,2-bis[4,4-bis(4-hydroxyphenyl)cyclohexyl]propane, 2,4-bis(4-hydroxyphenylisopropyl)phenol, tetra(4-hydroxyphenyl)methane.

Some of the other trifunctional compounds are 2,4-dihydroxybenzoic acid, trimesic acid, cyanuric chloride and 3,3-bis(3-methyl-4-hydroxyphenyl)-2-oxo-2,3-dihydroindole.

Preferred branching agents are 3,3-bis(3-methyl-4-hydroxyphenyl)-2-oxo-2,3-dihydroindole and 1,1,1 -tri(4-hydroxyphenyl)ethane.

The amount of any branching agents to be used is 0.05 mol% to 2 mol%, again based on moles of diphenols used in each case.

The branching agents can either be initially charged together with the diphenols and the chain terminators in the aqueous alkaline phase or added dissolved in an organic solvent prior to the phosgenation.

All these measures for preparation of the polycarbonates are familiar to those skilled in the art.

Aromatic dicarboxylic acids suitable for the preparation of the polyestercarbonates are, for example, orthophthalic acid, terephthalic acid, isophthalic acid, tert-butylisophthalic acid, 3,3'-diphenyldicarboxylic acid, 4,4'-diphenyldicarboxylic acid, 4,4-benzophenonedicarboxylic acid, 3,4'-benzophenonedicarboxylic acid, 4,4'-diphenyl ether dicarboxylic acid, 4,4'-diphenyl sulphone dicarboxylic acid, 2,2-bis(4-carboxyphenyl)propane, trimethyl-3-phenylindane-4,5'-dicarboxylic acid.

Among the aromatic dicarboxylic acids, particular preference is given to using terephthalic acid and/or isophthalic acid.

Derivatives of the dicarboxylic acids are the dicarbonyl dihalides and the dialkyl dicarboxylates, especially the dicarbonyl dichlorides and the dimethyl dicarboxylates.

The replacement of the carbonate groups by the aromatic dicarboxylic ester groups proceeds essentially stoichiometrically and also quantitatively, and so the molar ratio of the co-reactants is reflected in the final polyester carbonate. The aromatic dicarboxylic ester groups can be incorporated either randomly or in blocks.

Preferred modes of preparation of the polycarbonates for use in accordance with the invention, including the polyestercarbonates, are the known interfacial process (cf. e.g. WO 2004/063249 A1, EP 2 096 131 A1) and the known melt transesterification process (cf. e.g. WO 2001/05866 A1, WO 01/05867 A1, US 5,340,905 A, US 5,097,002 A, US 5,717,057 A).

In the first case, the acid derivatives used are preferably phosgene and optionally dicarbonyl dichlorides; in the latter case, they are preferably diphenyl carbonate and optionally dicarboxylic diesters. Catalysts, solvents, workup, reaction conditions etc. for the polycarbonate preparation or polyestercarbonate preparation have been described and are known to a sufficient degree in both cases.

In the production of polycarbonate by melt transesterification, a dihydroxyaryl compound is reacted with a diaryl carbonate in which, in the context of a transesterification reaction, a monohydroxyaryl compound is eliminated from the diaryl carbonate. The condensation leads initially to the formation of low molecular weight polycarbonate oligomers, which react further by continued elimination of the monohydroxyaryl compound to give high molecular weight polycarbonate (reaction scheme (I)). The progress of the reaction can be promoted by the use of suitable catalysts, 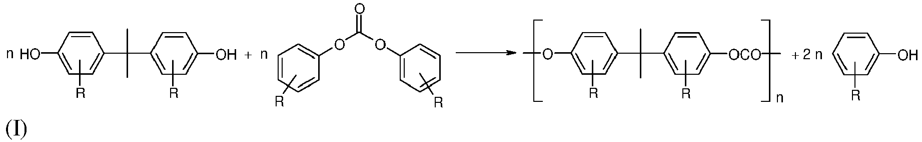 wherein
- R: is H, C₁- to C₁₈-alkyl-, C₁- to C₁₈-alkoxy, halogen such as Cl or Br or in each case optionally substituted aryl or aralkyl, preferably H or C₁- to C₁₂-alkyl, more preferably H or C₁- to C₈-alkyl and most preferably H or methyl.

The production of aromatic polycarbonates by the melt transesterification process is known and described for example in "Schnell", Chemistry and Physics of Polycarbonates, Polymer Reviews, Vol. 9, Interscience Publishers, New York, London, Sydney 1964, in D.C. Prevorsek, B.T. Debona and Y. Kersten, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 18, 75-90 (1980), in D. Freitag, U. Grigo, P.R. Müller, N. Nouvertne, BAYER AG, "Polycarbonates" in Encyclopedia of Polymer Science and Engineering, Vol. 11, Second Edition, 1988, pages 648-718, and finally in Dres. U. Grigo, K. Kircher and P.R. Müller "Polycarbonate" in Becker/Braun, Kunststoff-Handbuch, Volume 3/1, Polycarbonate, Polyacetale, Polyester, Celluloseester, Carl Hanser Verlag Munich, Vienna 1992, pages 117-299.

Industrially very important is the production of high molecular weight polycarbonate from 2,2-bis(4-hydroxyphenyl)propane (also abbreviated to bisphenol A or BPA) and diphenyl carbonate (also abbreviated to DPC).

Polycarbonates that can be prepared by means of the process according to the invention are preferably selected from the group comprising unbranched homopolycarbonates based on bisphenol A, branched polycarbonates or copolycarbonates, preferably selected from the group comprising block copolycarbonates, for example a siloxane-based block copolycarbonate or a polyester-based block copolycarbonate, polyestercarbonates or polycarbonates that are formed from a diaryl carbonate, for example diphenyl carbonate, and at least two different bisphenols, for example bisphenol A and bisphenol TMC or bisphenol A and one of the bisphenols of the general formulae (3) to (5) elucidated below: 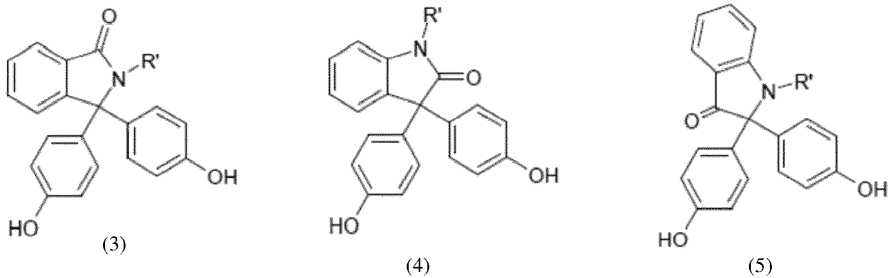 wherein R' in each case means C₁-C₄-alkyl, aralkyl or aryl, preferably means methyl oder phenyl.

The preparation of polycarbonates by the phase boundary process is also generally known. It is usually effected in a continuous process, by preparation of phosgene and subsequent reaction of bisphenols and phosgene in the presence of alkali and a catalyst, preferably a nitrogen catalyst, chain terminators and optionally branching agents in a mixture of aqueous alkaline phase and organic solvent phase, at the boundary. The reaction follows the reaction scheme (II): 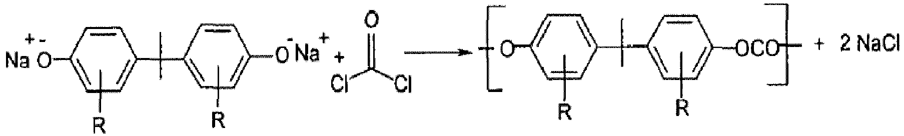 wherein
- R: is H, C₁- to C₁₈-alkyl-, C₁- to C₁₈-alkoxy, halogen such as Cl or Br or in each case optionally substituted aryl or aralkyl, preferably H or C₁- to C₁₂-alkyl, more preferably H or C₁- to C₈-alkyl and most preferably H or methyl.

Suitable catalysts are tertiary amines and onium salts. It is preferable to employ tributylamine, triethylamine and N-ethylpiperidine.

The preparation of polycarbonates, for example by the phase boundary process, is described in principle in the literature, see Schnell, "Chemistry and Physics of Polycarbonates", Polymer Reviews, Volume 9, Interscience Publishers, New York, London, Sydney 1964, pages 33-70; D. C. Prevorsek, B. T. Debona and Y. Kesten, Corporate Research Center, Allied Chemical Corporation, Morristown, N.J. 07960: "Synthesis of Poly(ester Carbonate) Copolymers" in Journal of Polymer Science, Polymer Chemistry Edition, Vol. 18, (1980)"; pages 75-90, D. Freitag, U. Grigo, P. R. Müller, N. Nouvertne', BAYER AG, "Polycarbonates" in Encyclopedia of Polymer Science and Engineering, Volume 11, Second Edition, 1988, pages 651-692, and finally by Dres. U. Grigo, K. Kircher and P. R-Müller "Polycarbonate" in Becker/Braun, Kunststoff-Handbuch [Plastics Handbook], Volume 3/1, Polycarbonate, Polyacetale, Polyester, Celluloseester [Polycarbonates, polyacetals, polyesters, cellulose esters], Carl Hanser Verlag Munich, Vienna 1992, pages 118-145. The further processing of the obtained polycarbonate - regardless whether obtained by a melt transesterification process or by a phase transfer process - may be conducted as described in WO2010139412A1 e.g. When the polycarbonate is obtained by a melt transesterification process the further processing may also be conducted as described in EP2174970A1 e.g. When the polycarbonate is obtained by a phase transfer process the further processing may also be conducted as described in WO2010139413A1 or WO2010139413A1 e.g.

The further processing as described in the above-mentioned documents comprises a final step conducted by an extruder or by a gear pump. At the end of this process step a finished polycarbonate is passed through orifices in a die plate comprising a number of such orifices. By being pressed through an orifice in such a die plate the polycarbonate forms a strand. When a polycarbonate strand leaves the die through the such an orifice it is cut into pellets by a cutting device, e.g. by a rotating knife.

In the meaning of the present invention a finished polycarbonate is a polycarbonate having a mean molecular weights M_{w} (determined by GPC) of 15,000 g/mol to 60,000 g/mol, preferably of 18,000 g/mol to 50,000 g/mol, especially of 26,000 g/mol to 45,000 g/mol, wherein all molecular weights refer to the weight average of the molecular weight.

The number of orifices is at least one, preferably more than one. The maximum number of orifices is limited by the cross sectional area of the extruder outlet, the cross sectional area of the die plate, and the sum of the cross sectional areas of the orifices. Typical numbers of orifices are from 1 to 140, preferably from 60 to 120. The cross sectional area of an orifice is from 10 to 50 mm² typically, preferably from 20 to 40 mm². The cross sectional shape of an orifice is circular usually; other suitable shapes, e.g. elliptical or hexagonal, are possible too.

According to the state of the art the material of enclosure wall of an orifice is the same material as the material the die plate consists of. Typically materials used in the state of the art are metal alloys such as material 1.4980 and, material 1.4057. The materials stellite 6 and solid P, a material 1.4057 with surface coating (a Sulzer Metco coating based on plasma assisted atomic diffusion) and Alloy 59 were also tested in comparison with the typically materials used in the state of the art.

So the enclosure wall of an orifice according to the state of the art essentially consist of an alloy comprising the following components:
Material 1.4980, commercially available and also known as DIN/EN X6NiCrTiMoVB25-15-2: 15 wt.-% Cr, 25.5 wt.-% Ni, 2.1 wt.-% Ti, 1.5 wt.-% Mn, 1.3 wt.-% Mo, more than 50 wt.-% Fe, further C, Si, P, S, V, each of C, Si, P, S, or V contributing less than 1 wt.-% to the alloy.

Material 1.4057, commercially available and also known as DIN/EN X17CrNi16-2:
16.5 wt.-% Cr, 2 wt.-% Ni, further C, Si, Mn, P, S, V, each of C, Si, Mn , P, S, or V contributing less than 1 wt.-% to the alloy, wherein the remainder to 100 wt-% (≥ 75 wt.-%) is the amount of Fe.

Stellite 6, commercially available and also known as DIN/EN G Co Cr 30 W 4:
1.1 wt.-% C, ≤ 1.5 wt.-% Si, ≤ 1.0 wt.-% Mn, ≤ 30.0 wt.-% Cr, ≤ 3.0 wt.-% Ni, ≤ 1.5 wt.-% Mo, ≤ 4.5 wt.-% W, ≤ 3 wt-%,wherein the remainder to 100 wt.-% (≥ 57.4 wt.-%) is the amount of Co.

The die plates according to the state of the art exhibit the disadvantage that under normal operational conditions degraded polycarbonate is formed at an outlet of an orifice, especially degraded polycarbonate is formed around the outlet of an orifice, more especially often degraded polycarbonate is formed around the outlet of an orifice ring-like. The degraded polycarbonate formed at the outlet of an orifice sticks to the respective orifice at least partly so that a solid body - a so-called lip - of degraded polymer is formed at the outlet of an orifice.

This lip of degraded polycarbonate results in an unstable flow of an polycarbonate strand pressed through an orifices of an die plate. Since usually a die plate exhibits numerous orifices which lie close to each other at an die plate this may lead to the incident that two or more strands of polycarbonate stick together and form double or multiple pellets after cutting. Such double or multiple pellets cause problems in conveying, weighing, and further processing like compounding.

Further, the degraded polycarbonate pollutes the finished polycarbonate and so worsens the quality of the finished polycarbonate. Especially, the degraded polycarbonate worsens the optical quality of the finished polycarbonate, more especially the degraded polycarbonate increases the amount of optical impurities, such as small polycarbonate particles having another refraction index, of the finished polycarbonate. This is especially disadvantageous when the finished polycarbonate shall be used for optical devices such as CDs, DVDs, optical parts for automotive applications like LED lamps and LED light guides, high viscosity materials for glazing applications, etc.

The problems caused by the degraded polycarbonate becomes worse the greater the amount of the degraded polycarbonate around an orifice of an die plate increases.

Therefore it is necessary to clean the orifices rather often which leads to costly and therefore undesired losses of continuity in the production of the polycarbonate and/or to more die cleaning efforts.

Furthermore, the orifices in the die plate wear out continuously under normal operational conditions. The wear-out of the orifices is intensified by the frequent cleaning additionally. Worn out orifices cause polycarbonate strands which further cause deformed pellets again which again cause problems in conveying, weighing, and further processing like compounding. This makes it necessary to replace a die plate after a certain time just because the orifices are wore out although the rest of the die plate is still in a workable condition.

In the state of the art it was tried to overcome these problems by the use of ceramic coatings or ceramic inserts. However, these ceramic coatings or ceramic inserts respectively have the disadvantage that the thermal dilatation coefficients of the ceramic coatings or ceramic inserts respectively are remarkable different from the thermal dilatation coefficients of the metal alloys a die plate is made of. This leads to mechanical tension or leakages or both during the operation of a die head which is often operated at a temperature of 300 °C to 350 °C. Further, during the cleaning of the die plate temperatures of 450 °C and more are reached which even cause greater problems.

Therefore, it is an object of the present invention to provide a process for the preparation of a polycarbonate which solves at least one of the above-mentioned problems. Especially, it is an object of the present invention to provide a process for the preparation of a polycarbonate which prevents or at least reduces the formation of degraded polycarbonate at an outlet of an orifice of a die plate and so prolongs the time in which the die plate can be used for the preparation of a polycarbonate without cleaning while the quality of the polycarbonate prepared shall remain acceptable. This - in turn -reduces costly and therefore undesired losses of continuity in the production of the polycarbonate and/or cleaning efforts.

The use of ceramic coatings or ceramic inserts shall be avoided because of the above-described disadvantages of ceramic coatings or ceramic inserts respectively.

Surprisingly it was found that the object of the present invention was achieved by a process according to the subject matter of the independent claim. Further embodiments are described in the dependent claims.

The present invention relates to a process for the preparation of a polycarbonate by a melt transesterification process or by a phase transfer process. The process according to the present invention is characterized in that a finished polycarbonate is passed through an orifice in a die plate comprising a number of such orifices, each orifice comprising an insert. So according to the process of the present invention - in a first step - a polycarbonate is prepared by a melt transesterification process or by a phase transfer process. Then - in a second step - the finished polycarbonate is passed through an orifice in a die plate comprising a number of such orifices, each orifice comprising an insert. According to the present invention the insert is in form of a bushing and this insert essentially consist of an alloy comprising equal to or less than 5 wt.-% Fe. Particularly the alloy comprises the following components:
(a) equal to or less than 5 wt.-% Fe,
(b) equal to or more than 40 wt.-% Ni,
(c) equal to or more than 15 wt.-% Cr,
(d) equal to or more than 10 wt.-% Mo,
(e) equal to or less than 5.5 wt.-% W,
(f) equal to or less than 24.5 wt.-% other components,
wherein the sum of the amounts of Fe, Ni, Cr, Mo, W and the other components adds up to 100 wt.-%.

The other components which may be comprised in the alloy from the insert consist of components such as Mn, Cu, Al, Si, P, S, C, V, and/or Co, e.g., each of Mn, Cu, Al, Si, P, S, C, V, and/or Co contributing less than 1 wt.-% to the alloy. This also refers to the preferred, the more preferred, and the most preferred alloy the insert used in the process according to the invention consists of.

Preferably, the insert essentially consist of an alloy comprising the following components:
(a) equal to or less than 2 wt.-% Fe,
(b) equal to or more than 45 wt.-% Ni,
(c) equal to or more than 18 wt.-% Cr,
(d) equal to or more than 12 wt.-% Mo,
(e) equal to or less than 5.5 wt.-% W,
(f) equal to or less than 17.5 wt.-% other components,
wherein the sum of the amounts of Fe, Ni, Cr, Mo, W and the other components adds up to 100 wt.-%.

More preferably, the insert essentially consist of an alloy comprising the following components:
(a) equal to or less than 1.5 wt.-% Fe,
(b) equal to or more than 50 wt.-% Ni,
(c) equal to or more than 20 wt.-% Cr,
(d) equal to or more than 14 wt.-% Mo,
(e) equal to or less than 5.5 wt.-% W,
(f) equal to or less than 9 wt.-% other components,
wherein the sum of the amounts of Fe, Ni, Cr, Mo, W and the other components adds up to 100 wt.-%.

Most preferably, the insert essentially consist of an alloy comprising the following components:
(a) equal to or less than 1.5 wt.-% Fe,
(b) equal to or more than 55 wt.-% Ni,
(c) 22 to 24 wt.-% Cr,
(d) 15 to 16.5 wt.-% Mo,
(e) equal to or less than 4.5 wt.-% W,
(f) equal to or less than 2 wt.-% other components,
wherein the sum of the amounts of Fe, Ni, Cr, Mo, W and the other components adds up to 100 wt.-%.

Especially preferably, the insert used in the process according to the invention essentially consist of an alloy which is essentially free of Fe.

Most especially preferably, the insert used in the process according to the invention essentially consist of an alloy which is commercially available and commonly known as alloy 59, also known as material 2.4605. The material is described in the Alloy 59 data sheet of VDM Metals International GmbH, Plettenberger Straße 2, 58791 Werdohl, Germany, of 2017.

The exterior shape of an insert is formed in such a way that the insert fits tightly into the respective orifice of the die plate to prevent leakage of polycarbonate between the outer surface of the insert and the orifice. Such an insert in form of a bushing is known from DE102011102069A1 or EP2617547A1, e.g.

### Experiments

The following description of experiments and of figures and the figures themselves shall further explain the invention. However, neither this description of experiments nor of the figures nor the figures themselves are meant to limit the invention neither to this description of experiments nor to the description of the figures nor to the figures themselves.

### Polycarbonate

A branched BPA based polycarbonate of Mw 35,000 g/mol containing 0.40 wt-% 1,1,1-tris-(4-hydroxyphenyl)-ethane (THPE) as branching agent and p-tert-butylphenol (BUP) as chain terminator was produced by the phase transfer process. The PC solution was send over a washing line to recover the catalyst and to free the PC solution from ionic substances such as NaOH and Na₂CO₃. The PC solution was freed from solvents in a preconcentration unit. In a final process step the polycarbonate was conveyed by a twin screw ZSK180 twin co-rotating degassing extruder through a die plate. The pressure with which the polycarbonate leaves the extruder is 40 bar. The die plate comprised eighty orifices which are arranged side-by-side horizontally with a distance of 14.2 mm (center of one orifice to the center of an adjacent orifice). To provide best possible comparability in each orifice an insert is put in, the free cross sectional area being 24 mm², and the length being 11 mm; all inserts are identical in shape and size. The material the inserts consist of are one of material 1.4980 (comparative material), material 1.4057 (comparative material), stellite 6 (comparative material), solid P (comparative material), alloy 59 (according to the invention). The die plate itself consists of 1.4057 and is fastened into a die head by hexagonal socket screws.

In the experiments the orifices are numbered from 1 to 80 beginning from the first orifice at the left side.

### Experiment 1

The inserts put in into in orifices 1 to 20 consist of stellite 6, the inserts put in into in orifices 21 to 40 consist of material 1.4057, the inserts put in into in orifices 41 to 60 consist of alloy 59, and the inserts put in into in orifices 61 to 80 consist of solid P. The throughput per die hole during the extrusion process was 82 kg/h and the die hold time was 7.58 hours. Each orifice was charged with the same amount of finished polycarbonate (622 kg). After the time of 7.58 hours the amount of polycarbonate which deposited around each set of orifices made from the same material was removed by a bronze spatula. Scrapped material from each set of 20 holes made from the same material was dissolved in 60 ml methylene chloride. The non-soluble degraded part of the deposit was filtered of on a 18.5 cm Macherey-Nagel folded filter and dried at 120 °C in a vacuum oven at 20 mbar for 16 hours. The deposits of each set of 20 orifices made out of the same material were and weighted on a Mettler AE200 analytical balance.

The results are summarized in Table 1.

**Table 1:**

| Position numbers of the orifices in the die plate made from the same material | Material of the insert of the 20 orifices in this position numbers | Weight (g) of the insoluble deposit around the set of the 20 die holes | Die hold time (hours) | Insoluble deposit around the set of 20 holes (mg/h) |
|---|---|---|---|---|
| 1-20 | Stellite | 0,69 | 7,58 | 91,0 |
| 21-40 | 1.4057 | 0,22 | 7,58 | 29,0 |
| 41-60 | Alloy 59 | 0,09 | 7,58 | 11,9 |
| 61-80 | P Solid | 0,19 | 7,58 | 25,1 |

### Experiment 2

The inserts put in into in orifices 1 to 20 consist of alloy 59, the inserts put in into in orifices 21 to 40 consist of material 1.4057, the inserts put in into in orifices 41 to 60 consist of material 1.4980, and the inserts put in into in orifices 61 to 80 consist of material 1.4057. The throughput per die hole during the extrusion process was 78 kg/h and the die hold time was 9.58 hours. Each orifice was charged with the same amount of finished polycarbonate (747 kg). After the time of 9.58 hours the amount of polycarbonate which deposited around the each set of 20 orifices made from the same material was removed by a bronze spatula Scrapped material from each set of 20 holes made from the same material was dissolved in 60 ml methylene chloride. The non-soluble degraded part of the deposit was filtered of on a 18.5 cm Macherey-Nagel folded filter and dried at 120°C in avacuum oven at 20 mbar for 16 hours to evaporate all methylene chloride.. The deposits of each set of 20 orifices made out of the same material were weighted on a Mettler AE200 analytical balance

The results are summarized in Table 2.

**Table 2:**

| Position numbers of the orifices in the die plate made from the same material | Material of the inserts of the 20 orifices in this position numbers | Weight (g) of the insoluble deposit around the set of the 20 die holes | Die hold time (hours) | Insoluble deposit around the set of 20 holes (mg/h) |
|---|---|---|---|---|
| 1-20 | Alloy 59 | 0,10 | 9,58 | 10,4 |
| 21-40 | 1.4057 | 0,49 | 9,58 | 51,1 |
| 41-60 | 1.4980 | 0,41 | 9,58 | 42,8 |
| 61-80 | 1.4057 | 0,49 | 9,58 | 51,1 |

Both the results in Table 1 and Table 2 clearly show that when an insert consisting of alloy 59 is used the amount of degraded polycarbonate deposited around an orifice of the die plate is reduced strongly. This - in turn - clearly shows that in the process according to the invention the formation of degraded polycarbonate is reduced. So the time in which the die plate can be used for the preparation of a polycarbonate without cleaning while the quality of the polycarbonate prepared remains acceptable is prolonged. This - in turn -reduces costly and therefore undesired losses of continuity in the production of the polycarbonate and/or cleaning efforts.

### Description of the figures

Fig. 1
   - 1.1: die plate,
   - 1.2: hexagonal socket screw,
   - 1.3: orifice,
   - 1.4: number of orifice (60),
   - 1.5: number of orifice (61),
   - 1.6: insert.
Fig. 2
   - 2.1: die plate,
   - 2.2: hexagonal socket screw,
   - 2.3: orifice,
   - 2.4: number of orifice (80),
   - 2.5: insert.
Fig. 3
   - 3.1: die plate,
   - 3.1.1: enlarged view on a section of the die plate
   - 3.2: hexagonal socket screw,
   - 3.3: orifice,
   - 3.3.1: enlarged view on an orifice,
   - 3.4: numbers of orifices,
   - 3.5: insert.

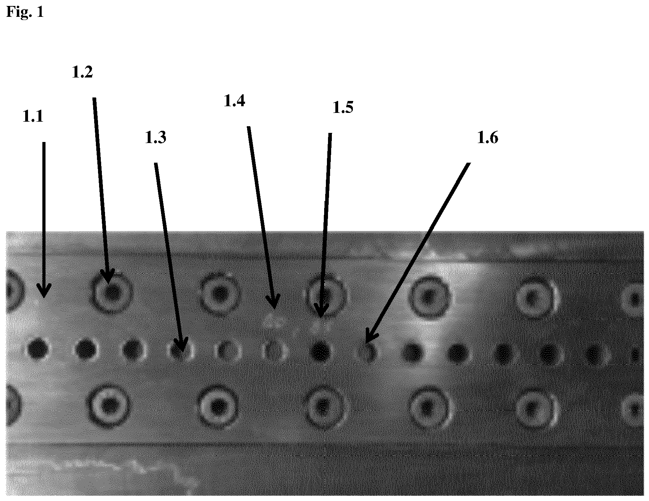

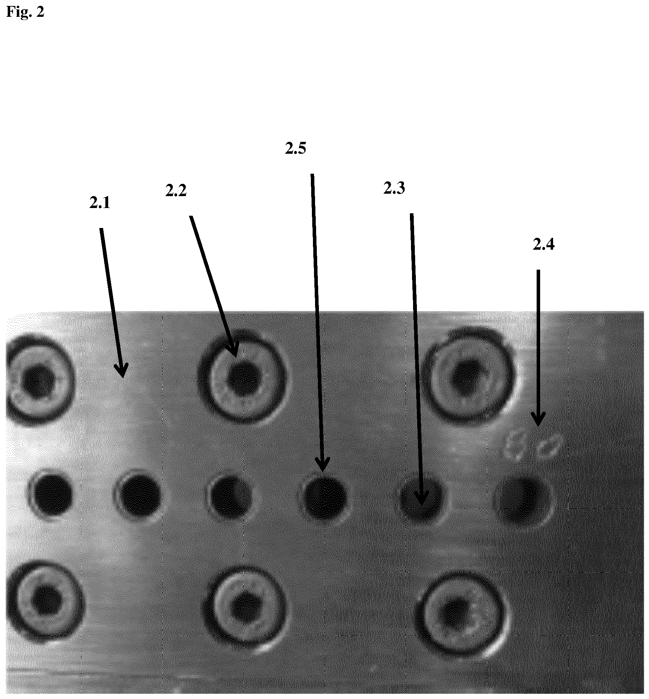

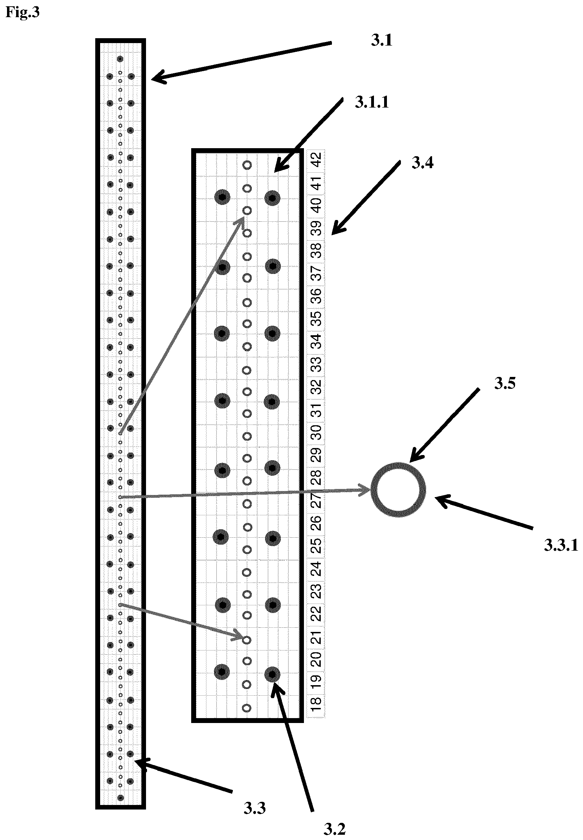

## Claims

1. Process for the preparation of a polycarbonate comprising at least the following steps:
(I) preparation of a polycarbonate by a melt transesterification process or by a phase transfer process,
(II) passing the finished polycarbonate through an orifice in a die plate comprising a number of such orifices, each orifice comprising an insert,
the insert being in form of a bushing and this insert essentially consisting of an alloy comprising equal to or less than 5 wt.-% Fe.

2. Process according to claim 1 the insert essentially consisting of an alloy comprising the following components:
(a) equal to or less than 5 wt.-% Fe,
(b) equal to or more than 40 wt.-% Ni,
(c) equal to or more than 15 wt.-% Cr,
(d) equal to or more than 10 wt.-% Mo,
(e) equal to or less than 5.5 wt.-% W,
(f) equal to or less than 24.5 wt.-% other components,
wherein the sum of the amounts of Fe, Ni, Cr, Mo, W and the other components adds up to 100 wt.-%.

3. Process according to claim 1 or 2 the insert essentially consisting of an alloy comprising the following components:
(a) equal to or less than 2 wt.-% Fe,
(b) equal to or more than 45 wt.-% Ni,
(c) equal to or more than 18 wt.-% Cr,
(d) equal to or more than 12 wt.-% Mo,
(e) equal to or less than 5.5 wt.-% W,
(f) equal to or less than 17.5 wt.-% other components,
wherein the sum of the amounts of Fe, Ni, Cr, Mo, W and the other components adds up to 100 wt.-%.

4. Process according to claim 1 to 3 the insert essentially consisting of an alloy comprising the following components:
(a) equal to or less than 1.5 wt.-% Fe,
(b) equal to or more than 50 wt.-% Ni,
(c) equal to or more than 20 wt.-% Cr,
(d) equal to or more than 14 wt.-% Mo,
(e) equal to or less than 5.5 wt.-% W,
(f) equal to or less than 9 wt.-% other components,
wherein the sum of the amounts of Fe, Ni, Cr, Mo, W and the other components adds up to 100 wt.-%.

5. Process according to any of claims 1 to 4 the insert essentially consisting of an alloy comprising the following components:
(a) equal to or less than 1.5 wt.-% Fe,
(b) equal to or more than 55 wt.-% Ni,
(c) 22 to 24 wt.-% Cr,
(d) 15 to 16.5 wt.-% Mo,
(e) equal to or less than 4.5 wt.-% W,
(f) equal to or less than 2 wt.-% other components,
wherein the sum of the amounts of Fe, Ni, Cr, Mo, W and the other components adds up to 100 wt.-%.
